(19) **Europäisches Patentamt / European Patent Office / Office européen des brevets**

(11) **EP 2 958 332 A1**

(12) **EUROPEAN PATENT APPLICATION**

(43) Date of publication:
**23.12.2015 Bulletin 2015/52**

(51) Int Cl.:
**H04N 21/25** *(2011.01)*      **H04N 21/482** *(2011.01)*
**H04N 21/24** *(2011.01)*      **H04N 21/475** *(2011.01)*
**H04N 21/442** *(2011.01)*

(21) Application number: **14382228.6**

(22) Date of filing: **16.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Vodafone IP Licensing Limited**
**The Connection**
**Newbury**
**Berkshire RG14 2FN (GB)**

(72) Inventors:
• **Rubio Andres, Francisco Javier**
  **E-28042 Madrid (ES)**
• **Rodríguez Machado, Rubén**
  **E-28042 Madrid (ES)**
• **Touset Rios, Miguel Angel**
  **E-28042 Madrid (ES)**

(74) Representative: **Boult Wade Tennant**
**Verulam Gardens**
**70 Gray's Inn Road**
**London WC1X 8BT (GB)**

(54) **Method and system for updating a list of recommended items**

(57)    There is provided a method for updating a list of recommended items (LRI) for a user connecting to a recommendation system via a user device, the list of recommended items (LRI) being within the recommendation system (RS), said recommendation system (RS) comprising one or more viewed items logs (VL) associated with the user, the method comprising the steps of selecting (56) a subset (512, 513) of items within the one or more viewed items logs (VL), wherein the size of the subset depends on a time difference (T) between consecutive connections by the user to the recommendation system (RS); comparing (58) the selected subset with the list of recommended items (LRI), deleting (59), from the list of recommended items (LRI), one or more items in common with the one or more viewed items logs (VL); there are also provided an application for updating a list of recommended items (LRI) and a recommendation system (RS).

**FIG. 1**

**Description**

**TECHNICAL FIELD OF THE INVENTION**

The present invention relates to methods and systems for updating a list of recommended items. Particularly, the invention is focused on the personal and individual updating process of the list of recommended items, performed by recommendation systems.

**BACKGROUND OF THE INVENTION**

In recent years, the accessibility to and provision of information and content such as news, TV programmes, film, music, books, etc. has increased exponentially. The information and content may today be provided from many different sources, and the variety and availability of content has increased substantially.

In order to facilitate content selection, and to filter the available content to provide a suitable selection for a given user, recommenders have been developed, which are able to monitor the available content and, in response to a user profile, to recommend content considered specifically suited for said user.

A recommender system is an entity that seeks to predict the 'rating' or 'preference' that a user would give to an item. Recommender systems typically produce a list of recommendations in one out of two ways - through collaborative or through content-based filtering. Collaborative filtering approaches build a model from a user's past behaviour (items previously purchased or selected and/or numerical ratings given to those items) as well as similar decisions made by other users; then they use that model to predict items (or ratings for items) that the user may have an interest in. Content-based filtering approaches utilize a series of discrete characteristics of an item in order to recommend additional items with similar properties. These approaches are often combined (Hybrid Recommender Systems).

In the state of the art, a type of the recommendations algorithms in recommenders creates clusters of people with the same likes; an example of this is Myxone™. This solution creates a list of items to be consumed by all the users of the cluster. When a user performs an action (read, share, like) in one of the items provided by the recommendations algorithm, said algorithm manages the action as a positive input for that item. After a period of time, when the same user accesses the list, he still finds the same items which have been consumed. This is due to the lack of capacity to read and store a record for each individual user, in such a way that the system on which Myxone™ works cannot be scaled so that personal service could be provided.

An example of this performance is also shown in YouTube and Amazon recommenders. In the case of YouTube, the recommender provides videos depending on the area a user is located in; therefore a user can click and see all the videos; however, after one or two days, YouTube recommender provides the same recommendations offered before to a same user who belongs to a particular cluster.

Patent application JP2013109425 describes a system which uses clusters to classify people profiles with similar likes ("technical knowledge, videogames,...") and wherein the user's consumption of content is processed to enable relevant content to be recommended to the user, this allows using the last items viewed of the cluster to provide recommendations. This system solves the problem of specialising which content the user may prefer, but it does not solve the problem of personal updating of the list of recommended items for each user of the system every time the user connects to the system.

Patent application US2012331494 shows a recommendation system in a broadcast TV. In this case the recommender tracks viewer events to provide recommendations taking into account a current viewed item. The system determines a viewer tracking log that corresponds to television programs watched previously at the user device during a timeslot. The recommendation module compares the user's viewing profile with available content for said timeslot and generates a content recommendation list, but this method is implemented on a system where the number of users is potentially constant, therefore this method may not be implemented on a system which could eventually grow in terms of user devices. In that scenario, the system cannot perform a personal update of the list of recommendations items for each user in the system.

Patent application US2013046772 describes a method that identifies and filters out data generated by persons which are manipulating a recommendation system by masquerading as a user, e.g. by repeatedly looking at particular item(s). The method filters the data determined by their system to be spurious, and is therefore removed from a recommendation list. The drawback of this method, once more, is that it is designed to be implemented on a system where the number of users is potentially constant; therefore this method may not be implemented on a system which could eventually grow in terms of user devices. This method is focused in computer security and the method does not provide a solution for personal updating of the list of recommended items for each user on the system.

The problems found in the recommenders of the state of the art is that even when some of them update recommendations lists, they do not provide individual and personalized updates, because the updates are related to a group of users defined by one or more clusters; therefore there are no systems which record individual usage of a recommendations system for individual recommendation and which could be scaled.

## STATEMENT OF THE INVENTION

The present invention provides a solution for the aforementioned problems by a method for updating a list of recommended items (LRI) for a user connecting to a recommendation system via a user device according to claim 1, an application for updating a list of recommended items (LRI) according to claim 9 and a recommendation system (RS) according to claim 11. The dependent claims define preferred embodiments of the invention. All the features described in this specification (including the claims, description and drawings) and/or all the steps of the described method can be combined in any combination, with the exception of combinations of such mutually exclusive features and/or steps.

In particular, in a first aspect of the invention there is provided a method for updating a list of recommended items for a user profile connecting to a recommendation system via a user device, the list of recommended items being within the recommendation system, said recommendation system comprising one or more viewed items logs associated with the user, the method comprising the steps of:

a) selecting a subset of items within the one or more viewed items logs, wherein the size of the subset depends on a time difference (T) between consecutive connections by the user to the recommendation system;
b) comparing the selected subset with the list of recommended items,
c) deleting, from the list of recommended items, one or more items in common with the subset of items within the one or more viewed items logs.

In an scenario where a user connects to a recommendation system through a user device via a user profile and where the recommendation system comprises a list of recommended items (LRI) and one or more viewed items logs associated with said user, advantageously this method allows the system to personalize an update of a LRI for each user accessing to the system. As a difference with other methods for updating LRIs in the state of the art, a system implementing this method improves user experience because items which have been previously consumed do not appear on a LRI when the user accesses a following time to a recommendation system.

On the other hand, the number of items which are compared with the ones comprised in a viewed log are set depending on a time difference (T) between consecutive connections by the user to the recommendation system; this advantageously allows frequent users, this is, user accessing to the system with a time difference (T) between consecutive connections lower than a time difference (T) for other users, to benefit from an update which is dependent on the time which has passed since he obtained the last update, which is optimum, and also in an individual and personalized manner.

Besides, the method allows reducing the non-useful traffic sent to a particular user profile because it deletes the items which have already been viewed on a system which may be used by a variable number of users or user profiles. There are no recommendation systems, in the state of the art, being able to adapt the usage of their resources to provide individual and personalized service to a variable number of user profiles.

In an embodiment according to the first aspect of the invention, the number of items in the subset of the items in the viewed items logs associated with the user profile of said user may be indirectly proportional to the time difference (T).

Advantageously the method according to the invention offers larger content or a greater number of items to the users with more activity satisfying their demand. This is, the smaller the time difference T, the bigger the number of items to compare required. Also, it is possible to redistribute resources from users with less activity to users with more activity and to provide new items for said users with more activity. Due to this embodiment the growth of the number of users is possible thus obtaining a scalable system. This enhances the user's experience and optimizes the use of resources and network.

In an embodiment according to the first aspect of the invention, the subset of items which is compared in the viewed items log (VL) associated with a user profile against a list of recommended items (LRI) associated with said user profile, named as comparison set (CS) (512, 513), comprises a constant number of items for a time difference (T) between connections such that, given a range [a, b] where 'a' and 'b' are particular times between connections, wherein 'a' is lower than 'b' and lower than a pre-set threshold X, and 'b' is bigger than 'a' and lower than X, then:

- if T is lower than a, the constant number of items is N;
- if T is bigger than a, and lower than b, the constant number of items is M, wherein M is a lower number than N;
- if T is bigger than b and lower than X, the constant number of items is E, wherein E is a lower number than N and also a lower number than M.

Advantageously this embodiment allows managing the number of items to be compared and deleted from the list of recommended items (LRI) according to the frequency a user connects to the recommender system. According to this embodiment, frequent users benefit from being offered a greater number of items which have not been viewed which enhances the user's experience.

In an embodiment according to the first aspect of the invention, the value of the pre-set threshold (X) depends on the type of recommended items.

Advantageously defining the value of a pre-set threshold (X) depending on the type of recommended items provides freedom to the algorithm and to the updating decision for a user profile, because depending on the type of recommended items the updating rate may be different. For example the updating rate of the node "F1 news" is lower than the updating rate of the node "political news"; therefore, the pre-set threshold (X) which may be established for a node related to F1 news may be greater that a pre-set threshold for a node related to political news.

The threshold (X) may also be chosen at cluster level; this is, a threshold (X) may be chosen by the type of similarities among user profiles, and not by the type of content. Besides, the threshold may be obtained from several partial thresholds, for example: If a cluster is formed by men whose ages are comprised between 20-30 years, from a particular City, who work in technology and who do sports, then for the nodes defining such cluster there may be:

- Technology_threshold (X1), 36hours,
- Running_threshold (X2), 40hours,
- City_related_news_threshold (X3), 24 hours

Then X=f(X1, X2, X3)=25 hours, in an example. As it can be seen, f(X1, ...) may adopt different forms and formulae. Also, different weights may be assigned to different nodes for being used within a formula.

In an embodiment according to the first aspect of the invention, the list of recommended items (LRI) is further updated according to a rating system. Advantageously, the users are offered those items being more popular among other users in the cluster or in a different cluster.

In an embodiment according to the first aspect of the invention, the value of the pre-set threshold is dependent on the moment of connection, preferably an hour of the day or a day of the week. Advantageously, for example, during weekend the threshold may be lower because the user may have more time for connecting and during the week the threshold may be higher, and thus more permissible, since the user may not have time to see the items as he may be working.

In an embodiment according to the first aspect of the invention, there is presented a method for dynamically changing recommended items for user profiles within a recommendation system, the recommendation system comprising one or more list of recommended items associated with user profiles,
the method comprising the steps of:

i. determining a connection time (t1) at which a user associated with a user profile connects via a user device to the recommendation system,
ii. determining a time difference (T) between the connection time (t1) and a previous connection time (t2) by the user,
iii. running, by the recommendation system (RS), an algorithm to update a list of recommended items (LRI) according to a method as defined in the present specification, if the time T is lower than a pre-set threshold (X), the list of recommended items associated with a user profile of said user,
iv. sending the list of recommended items.

This method updates the recommendation items only for each user profile which has accessed the recommendation system in a time interval, or time difference (T) between connections which is lower than a pre-set threshold (X). Advantageously the update is not performed on every user; this is, the update is not performed on those user profiles not accessing frequently the recommendation system which allows a system to decide a profitable or customized use of resources.

The method additionally allows, due to the step iii), to scale the number of users on a recommendation system because it is possible to not provide service for the users who may be using the recommendation system occasionally therefore saving the computing process for a lot of users that do not require to run this method and providing the perception of personal recommendation to the rest of users" so that the capacity of the system can be shared among additional users. This is, for users for which the time difference (T) between connections is greater than a threshold, the method may include reallocation of resources of the system for users with higher activity. Therefore, it is possible to scale the number of user profiles benefiting from a recommendation system implementing a method for dynamically changing recommended items according to the invention. There are no recommendation systems in the state of the art being able to adapt the usage of their resources to provide service to a variable number of user profiles.

As it may be expected, user profiles accessing the system and whose time difference (T) between connections is greater that a pre-set threshold (X) may receive a list of recommended items but which has not been updated in a personal and optimum manner according to the invention.

In an embodiment according to the first aspect of the invention there is provided a method for dynamically changing recommended items for user profiles accessing for the first time to a recommendation system (RS) associated with a recommendation system (RS), the recommendation system (RS) comprising one or more list of recommended items (LRI) associated with user profiles, the method comprising the steps of:

i. determining a connection time (t1) at which a user associated with a user profile connects via a user device (UD) to the recommendation system (RS),
ii. upon determination that the connection time (t1) is the first time that the user connects via a user device (UD) to the recommendation system (RS), running, by the recommendation system (RS), an algorithm to update a list of recommended items (LRI), if the connection time (t1) is lower than a pre-set threshold (X), the list of recommended items associated with a user profile of said user,
iii. sending the list of recommended items (LRI).

Advantageously this method updates the recommendation items for each user profile when a user accesses for the first time to the recommendation system (RS). Due to this embodiment, a method according to this embodiment gives priority to users accessing the system for the first time over the users who are previously registered on a recommendation system (RS) because resources are allocated for said users in this case and there would be no need for deciding whether to update or not as in the rest of cases.

In a second aspect of the invention there is provided an application for updating a list of recommended items (LRI), the application comprising:

- means for determining a time difference (T) between consecutive connections by the user to the recommendation system (RS),
- means for selecting a subset of items within one or more viewed items logs (VL), wherein the size of the subset depends on a time difference (T) between consecutive connections by the user to the recommendation system (RS);
- means for comparing the selected subset with the list of recommended items (LRI),
- means for deleting, from the list of recommended items (LRI), one or more items in common with the one or more viewed items logs (VL).

Advantageously this application comprises the means to make a recommendation system on which the application may be running to perform a method according to the invention, and also allows said method to be implemented on a device that may be connected to a telecommunication network without any perception and intervention of the final user, allowing a user profile to receive an updated list of recommended items.

In an embodiment of an application according to the second aspect of the invention, comprises

- means for determining a connection time (t1) at which a user associated with a user profile connects via a user device (UD) to a recommendation system (RS),
- means for determining a time difference (T) between the connection time (t1) and a previous connection time (t2) by said user,
- means for reading a viewed items log (VL) comprising viewed items from a user profile,
- means for reading a list of relevant items (LRI) sent by a recommendation system (RS),
- means for comparing a time difference (T) between connections of a user profile to the recommendation system (RS), against a pre-set threshold (X),
- means for running an algorithm to update a list of recommended items (LRI) according to the method of the first aspect of the invention, if the time T is lower than a pre-set threshold (X), wherein the list of recommended items is associated with a user profile of said user
- means for sending the updated list of recommended items (LRI).

Advantageously this application allows a system to implement rules and actions, for implementing a method according to the invention.

In a third aspect of the invention there is provided a recommendation system comprising:

- a user's viewed items log (VL),
- one or more lists of recommended items (LRI), and
- means adapted to perform the relevant steps of a method according to the first aspect of the invention when they are performed in a recommendation system (RS).

Advantageously a recommendation system according to the third aspect of the invention is adapted to perform a method according to the invention and allows implementing this method in a device that may be connected to a telecommunication network without any perception and intervention of the final user, allowing the recommendation system to provide a new list of items to the users that connect with the recommenders frequently.

*Further aspects - additional aspects*

Further aspects are also provided as additional aspects and/or in combination with any of the above described aspects, which are described herein below.

In a first additional aspect, there is provided a method for dynamically changing recommended items for user profiles associated with a recommendation system, the recommendation system comprising one or more list of recommended items associated with user profiles,
the method comprising the steps of:

> a) determining a connection time (t1) at which a user associated with a user profile connects via a user device to the recommendation system,
> b) determining a time difference (T) between the connection time (t1) and a previous connection time (t2) by the user,
> c) running, by the recommendation system, an algorithm to update a list of recommended items, if the time T is lower than a pre-set threshold, the list of recommended items associated with a user profile of said user,
> d) sending the list of recommended items.

This method updates the recommendation items for each user profile which has accessed the recommendation system in a time interval, or time difference (T) between connections which is lower than a pre-set threshold; Advantageously the update is not performed on those user profiles not accessing frequently the recommendation system which allows a system to decide a profitable or customized use of resources.

The method according to the first additional aspect of the invention additionally allows, due to the step c), to scale the number of users on a recommendation system because it is possible to provide the users who may be using the recommendation system occasionally with idle connections, so that the capacity of the system can be shared among additional users. This is, for users for which the time difference (T) between connections is greater than a threshold, the method may include reallocation of resources of the system for users with higher activity. Therefore, it is possible to scale the number of user profiles benefiting from a recommendation system implementing a method for dynamically changing recommended items according to the invention. There are no recommendation systems in the state of the art being able to adapt the usage of their resources to provide service to a variable number of user profiles.

In an embodiment according to the first additional aspect of the invention, the recommendation system further comprises one or more viewed items logs associated with user profiles, and the algorithm in step c) uses a viewed items log associated with the user profile to filter items from the list of recommended items associated with said user profile. Advantageously adding a viewed items log allows a recommender method and system to implement rules and actions optimizing the implemented method. For example, if the viewed items log comprises programs related to cooking lessons, then the rule "give priority to cooking lessons" may be implemented.

In an embodiment according to the first additional aspect of the invention, the step c) of running the algorithm to update the list of recommended items may comprise:

> i. selecting a subset of items within the one or more viewed items logs (VL), wherein the size of the subset depends on a time difference (T) between consecutive connections by the user to the recommendation system (RS);
> ii. comparing the selected subset with the list of recommended items (LRI),
> iii. deleting, from the list of recommended items (LRI), one or more items in common with the subset of items within the one or more viewed items logs (VL).

Advantageously, this method allows the system to personalize an update of a LRI for each user accessing to the system. As a difference with other methods for updating LRIs in the state of the art, a system implementing this method improves user experience because items which have been previously consumed do not appear on a list of recommendations when the user accesses a subsequent time to a recommendation system (RS).

On the other hand, the number of items which are compared with the ones comprised in a viewed log (VL) are set depending on a time difference (T) between consecutive connections by the user to the recommendation system (RS); this advantageously allows frequent users, this is, user accessing to the system very frequently, to benefit from an update which is dependent on the time which has passed since he obtained the last update, which is optimum, and also in an individual and personalized manner.

Besides, the method allows reducing the non-useful traffic sent to a particular user profile because it deletes the items which have already been viewed on a system which may be used by a variable number of users or user profiles. There are no recommendation systems, in the state of the art, being able to adapt the usage of their resources to provide individual and personalized service to a variable number of user profiles.

This method updates the recommendation items only for each user profile which has accessed the recommendation system in a time interval, or time difference (T) between connections which is lower than a pre-set threshold (X). Advantageously the update is not performed on every user; this is, the update is not performed on those user profiles not accessing frequently the recommendation system which allows a system to decide a profitable or customized use of resources.

As it may be expected, user profiles accessing the system and whose time difference (T) between connections is greater that a pre-set threshold (X) may receive a list of recommended items but which has not been updated in a personal and optimum manner according to the invention.

In an embodiment according to the first additional aspect of the invention, the value of the pre-set threshold (X) depends on the type of recommended items.

Advantageously defining the value of a pre-set threshold (X) depending on the type recommended items provides freedom to the algorithm and to the updating decision for a user profile, because depending on the type of recommended items the updating rate may be different. For example the updating rate of the node "F1 news" is lower than the updating rate of the node "political news"; therefore, the pre-set threshold (X) which may be established for a node related to F1 news may be greater that a pre-set threshold for a node related to political news.

The threshold (X) may also be chosen at cluster level; this is, a threshold (X) may be chosen by the type of similarities among user profiles, and not by the type of content. Besides, the threshold may be obtained from several partial thresholds, for example: If a cluster is formed by men whose ages are comprised between 20-30 years, from a particular City, who work in technology and who do sports, then for the nodes defining such cluster there may be:

- Technology_threshold (X1), 36hours,
- Running_threshold (X2), 40hours,
- City_related_news_threshold (X3), 24 hours

Then X=f(X1, X2, X3)=25 hours, in an example. As it can be seen, f(X1, ...) may adopt different forms and formulae. Also, different weights may be assigned to different nodes for being used within a formula.

In an embodiment according to the first additional aspect of the invention, the number of items in the subset of the items in the viewed items logs associated with the user profile of said user may be indirectly proportional to the time difference (T).

Advantageously the method according to the first additional aspect of the invention offers larger content or a greater number of items to the users with more activity satisfying their demand. This is, the smaller the time difference T, the bigger the number of items to compare required. Also, it is possible to redistribute resources from users with less activity to users with more activity and to provide new items for said users with more activity. Due to this embodiment, again, the growth of the number of users is possible thus obtaining a scalable system. This enhances the user's experience and optimizes the use of resources and network.

In an embodiment according to the first additional aspect of the invention, the subset of items which is compared in the viewed items log (VL) associated with a user profile against a list of recommended items (LRI) associated with said user profile, named as comparison set (CS) (512, 513), comprises a constant number of items for a time difference (T) between connections such that, given a range [a, b] where 'a' and 'b' are particular times between connections, wherein 'a' is lower than 'b' and lower than X, and 'b' is bigger than 'a' and lower than X, then:

- if T is lower than a, the constant number of items is N;
- if T is bigger than a, and lower than b, the constant number of items is M, wherein M is a lower number than N;
- if T is bigger than b and lower than X, the constant number of items is E, wherein E is a lower number than N and also a lower number than M.

Advantageously this embodiment allows managing the number of items to be compared and deleted from the list of recommended items (LRI) according to the frequency a user connects to the recommender system. According to this embodiment, users whose access is more frequent benefit from being offered a greater number of items which have not been viewed which enhances the user's experience.

In an embodiment according to the first additional aspect of the invention, the list of recommended items (LRI) is further updated according to a rating system. Advantageously, the users are offered those items being more popular among other users in the cluster or in a different cluster.

In an embodiment according to the first additional aspect of the invention, the value of the pre-set threshold is dependent on the moment of connection, preferably an hour of the day or a day of the week.

Advantageously, for example, during weekend the threshold may be lower because the user may have more time for connecting and during the week the threshold may be higher, and thus more permissible, since the user may not have time to see the items as he may be working.

In a second additional aspect of the invention there is provided a method for dynamically changing recommended items for user profiles accessing for the first time to a recommendation system (RS) associated with a recommendation system (RS), the recommendation system (RS) comprising one or more list of recommended items (LRI) associated with user profiles, the method comprising the steps of:

a) determining a connection time (t1) at which a user associated with a user profile connects via a user device (UD) to the recommendation system (RS),
b) upon determination that the connection time (t1) is the first time that the user connects via a user device (UD) to the recommendation system (RS), running, by the recommendation system (RS), an algorithm to update a list of recommended items (LRI), if the connection time (t1) is lower than a pre-set threshold (X), the list of recommended items associated with a user profile of said user,
c) sending the list of recommended items (LRI).

Advantageously this method updates the recommendation items for each user profile when a user accesses for the first time to the recommendation system (RS). Due to this additional aspect, a method according to this embodiment gives priority to users accessing the system for the first time over the users who are previously registered on a recommendation system (RS) because resources are allocated for said users in this case and there would be no need for deciding whether to update or not as in the rest of cases.

In a third additional aspect of the invention there is provided an application for updating a list of recommended items (LRI), the application comprising:

- means for determining a connection time (t1) at which a user associated with a user profile connects via a user device to a recommendation system,
- means for determining a time difference between the connection time (t1) and a previous connection time (t2) by said user,
- means for reading a list of relevant items sent by a recommendation system (RS),
- means for comparing a time between connections of a user profile to the recommendation system, against a pre-set threshold,
- means for running an algorithm to update a list of recommended items, if the time difference (T) is lower than a pre-set threshold, wherein the list of recommended items is associated with a user profile of said user,
- means for sending the updated list of recommended items.

Advantageously this application comprises the means to make a recommendation system on which the application may be running to perform a method according to the invention, and also allows said method to be implemented on a device that may be connected to a telecommunication network without any perception and intervention of the final user, allowing a user profile to receive an updated list of recommended items.

In an embodiment of an application according to the third additional aspect of the invention, comprises means for reading a viewed items log comprising viewed items from a user profile.

Advantageously adding a viewed items log allows the application to implement new rules and actions, optimizing the implemented method to be performed by a recommendation system. For example, if the viewed items log comprises programs related to cooking lessons, then the rule "give priority to cooking lessons" may be implemented.

In a fourth additional aspect of the invention there is provided a recommendation system comprising:

- a user's viewed items log,
- one or more list of recommended items, and
- means adapted to perform the relevant steps of a method according to according to the first and second additional aspects of the invention when they are performed in a recommendation system.

Advantageously a recommendation system according to the fourth additional aspect of the invention is adapted to perform a method according to the first additional aspect of the invention and allows implementing this method in a device that may be connected to a telecommunication network without any perception and intervention of the final user, allowing the recommendation system to provide a new list of items to the users that connect with the recommenders frequently.

## DESCRIPTION OF THE DRAWINGS

These and other characteristics and advantages of the invention will become clearly understood in view of the detailed description of the invention which becomes apparent from preferred embodiments of the invention, given just as an example and not being limited thereto, with reference to the drawings.

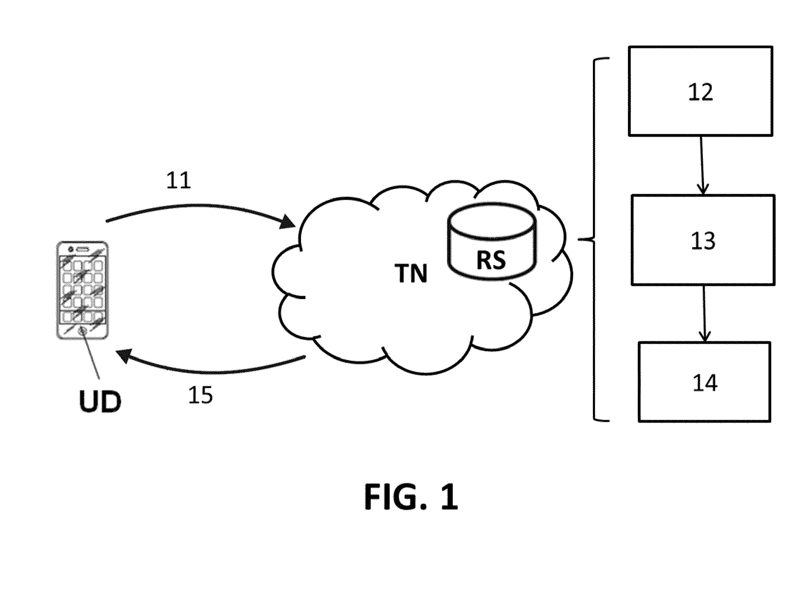

Figure 1     This figure represents an embodiment of a system and method steps performed on the first access (11) a user device (UD) performs to a recommendation system (RS): determining (12) a connection time (t1), upon determination that the connection time (t1) is the first time (13) that the user connects via a user device (UD) to the recommendation system (RS), running (14) an algorithm to update and sending (15) the list of recommended items (LRI).

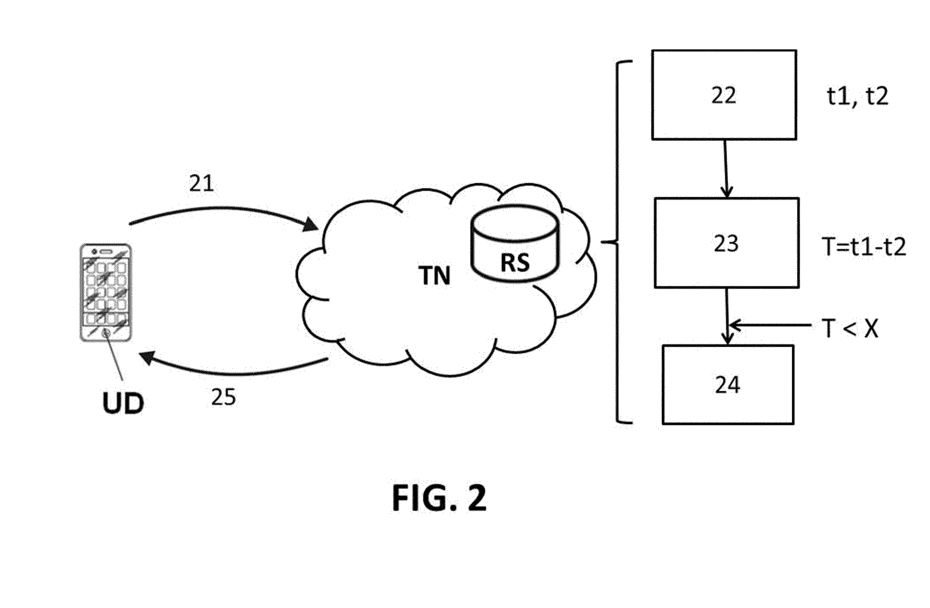

Figure 2     This figure represents an embodiment of the system and the method steps performed when a user profile accesses the recommendation system for the second and subsequent accesses to a RS: determining (22) a connection time (t1) at which a user associated with a user profile connects (21), determining a time difference (T) (23) between the connection time (t1) and a previous connection time (t2) by the user, running (24) an algorithm to update and sending (25) the list of recommended items (LRI).

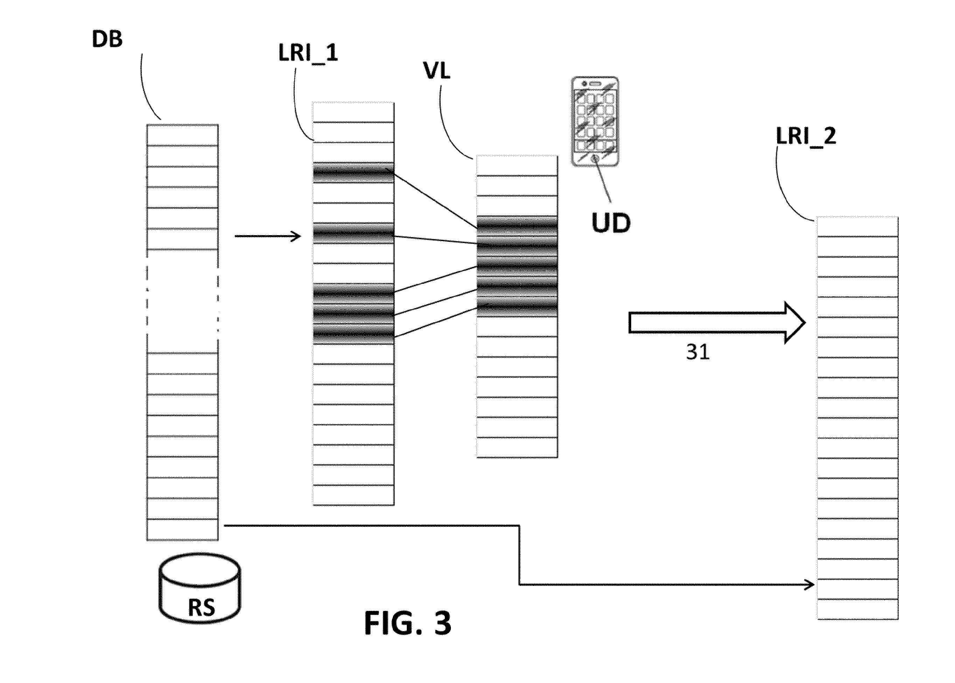

Figure 3     This figure represents an embodiment of a system which comprises a database (DB) with items for being offered, a first list of recommended items (LRI_1) comprising 20 items, and a viewed items log (VL) of a user profile comprising 15 items, where 5 of the viewed items may be compared with the first list of recommended items (LRI_1) so that a second list of recommended items (LRI_2) is prepared with new items, not comprising those which are coincident among the 5 which are to be compared.

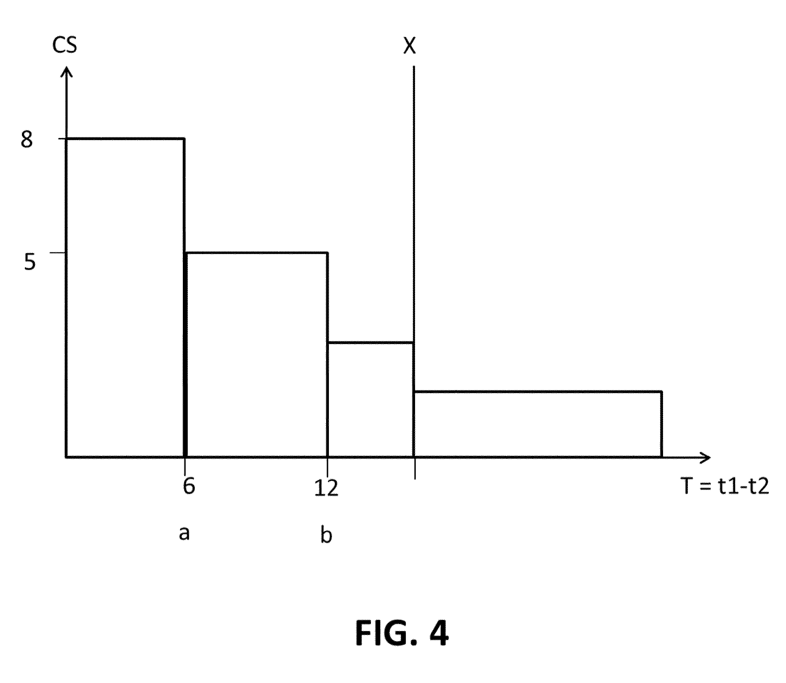

Figure 4     This figure shows an embodiment of the method where a comparison set (CS) depends on the time difference (T) between connections in such a way that the CS comprises a constant number of items for ranges of time between connections T; in the case of figure 4, for a time difference (T) between connections comprised within a range [a, b], where 'a', is 6 hours and 'b' is 12 hours, the comparison set is 5. In this example, for a user profile whose time T is 8 hours the number of items from its viewed items log (VL) to be compared with the list of recommended items (LRI) is 5.

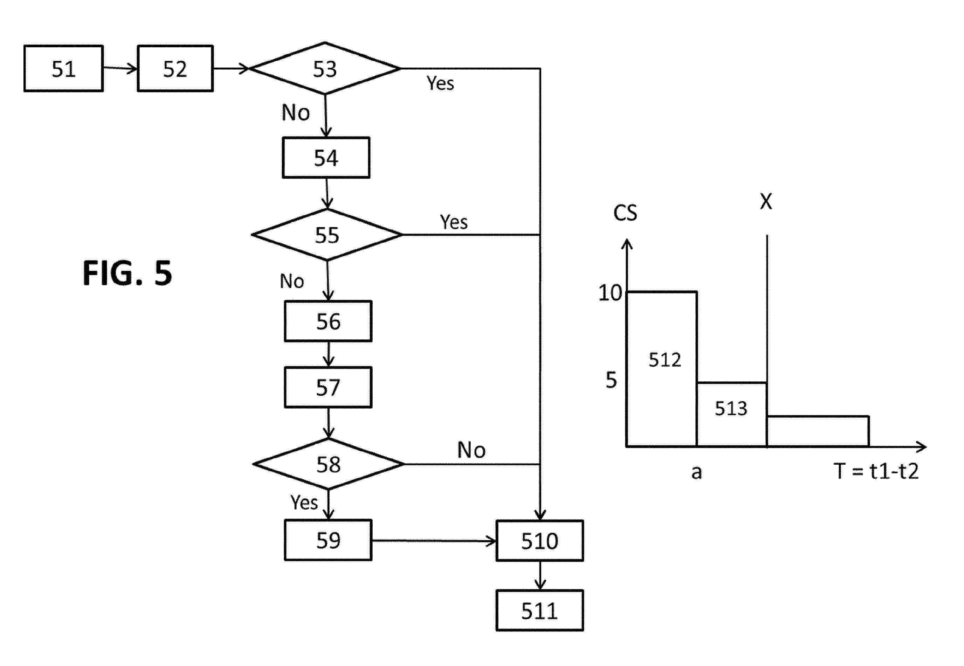

Figure 5     This figure shows an embodiment of a flow diagram of a method according to the present invention. This figure also shows a graphic representing the distribution of different comparison sets (CS).

## DETAILED DESCRIPTION OF THE INVENTION

Once the object of the invention has been outlined, specific non-limitative embodiments are described hereinafter. The terms cellular access mobile telecommunication network and telecommunication network (TN) are used interchangeably and may refer to the area or zone wherein a BTS (Base Transceiver Station) can supply coverage to user device of said area.

A method according to the invention may be performed on a system as the one represented in figure 1 comprising a recommendation system (RS), a telecommunications network (TN) and one or more user devices (UD), wherein the user device (UD) may be a mobile phone, a tablet, a computer, a lap top or similar.

The telecommunications network (TN) may be based on an environment of different mobile bearers, such as 2G, 3G, 4G, or on other type of networks such as Local Area Networks (LAN), Metropolitan Area Networks (MAN), Wide Area Network (WAN), etc.

The method may be implemented by an application running on a user device (UD) such as a mobile phone, wherein the application may be downloaded and run on said user device (UD) in communication with a server or recommendation system (RS).

*First access to the Recommendation System by a user*

The application may implement a registration process where the user may input age and gender so that the method according to the invention may decide the best cluster or clusters for said user belonging to a group of, for example, different ages (for example girl between 15-21 years); these clusters may appear as a first option in the application. If the user does not register he may be offered or assigned a set of predetermined nodes of items with good acceptance by other users in the system, for example, News, Sport, Technology, Jokes, etc. There may also be a recommendation parameter based on the location of the user device (UD). For example related with the local area on which the user profiles are registered.

As it can be seen in figure 1, the first access (11) the user device (UD) performs to a recommendation system (RS) implies an update of the list of recommended items according to the present invention. The process which is implemented is the following:

a) determining (12) a connection time (t1) at which a user associated with a user profile connects via a user device (UD) to the recommendation system (RS),

b) upon determination that the connection time (t1) is the first time (13) that the user connects via a user device (UD) to the recommendation system (RS), running (14), by the recommendation system (RS), an algorithm to update a list of recommended items (LRI) the list of recommended items associated with a user profile of said user,

c) sending (15) the list of recommended items (LRI) to the user device (UD) through the telecommunications network (TN).

*Second and further accesses to the Recommendation System (RS) by a user*

With the subsequent accesses, if the user reads articles from each cluster the method may be able to learn from the user's usage, for example if the user reads a high number of football news from the sports node in his cluster, the recommender system (RS) may provide a list of recommended items (LRI) with a greater number of football news and may reduce the number of pieces of news from other sports that are not viewed.

Besides, for each user the method is able to track the activity of each user profile on the system, so that the method follows the frequency in which each individual user profile accesses the recommendation system (RS), by means of a user device (UD), as it can be seen in figure 2. This is achieved by registering or determining (22) a connection time (t1) at which a user associated with a user profile connects (21) via a user device (UD) to the recommendation system (RS); subsequently the method allows determining a time difference (T) (23) between the connection time (t1) and a previous connection time (t2) by the user; if the time T is lower than a pre-set threshold (X) the method allows running (24), by the recommendation system (RS), an algorithm to update a list of recommended items (LRI), the list of recommended items associated with a user profile of said user. After the list has been prepared, either updated or not, the method allows sending (25) the list of recommended items (LRI). Therefore, for each user profile accessing the recommendation system, the application decides depending on the frequency of use, to which user profile or group of user profiles may distribute the resources of the system with the aim of updating, or not, the list of recommended items (LRI).

In an embodiment the method detects the viewed content in a way that viewed content may be deleted for a personalized updating of the list of recommended items (LRI); therefore the list of recommended items (LRI) is closer to what a particular or individual user prefers. As an advantage, since the update is partial and not global in terms of number of user profiles on the system, resources can be reassigned for custom update.

The content, in terms of updating ratio, may be static, semi-static and variable; therefore, the parameter "time difference (T)" may have more influence on those users belonging to clusters which are more frequently updated. In an example dynamic presetting of the threshold X is achieved depending on the content.

According to an embodiment represented in figure 3 the use of a viewed items logs (VL) allows the recommendation system (RS) to track the read items for a particular user profile and delete (31) those which have been seen; for example if a user profile has been offered five items related to adventures films and he has watched four of them, these four films will not appear the following time the user profile accesses on the system (only if the frequency of connection allows the algorithm to update such list). Due to this embodiment, as it is seen in figure 3, if the recommendation system comprises a database (DB) with thousands of items for being offered, the first list of recommended items (LRI_1) for instance comprises 20 items, and the viewed items log (VL) of a user profile comprises for example 15 items, then a fixed number of the viewed items, for example 5 items, may be compared with the first list of recommended items (LRI_1) so that a second list of recommended items (LRI_2) is prepared with new items from the database (DB) for not repeating those 5 items which have been seen. Advantageously the second list of recommended items (LRI_2) does not comprise those items which are coincident between the database (DB) and the viewed items log (VL) among the 5 which are to be compared.

However, a possible scenario of an embodiment in which a method compares and deletes a fixed number of items is that users accessing frequently to a recommendation system (RS) may be presented with repeated items; for example, for a user whose viewed items log (VL) comprises 20 items and he is a frequent user who may watch 10 items per day, if his list of recommended items (LRI) is updated every day, then it would be advantageous to update 10 items, instead of a fixed number, as in the previous example where only 5 items where compared and potentially deleted.

In a further embodiment, a comparison set (CS), the comparison set (CS) being the number of items from the viewed items log (VL), which is compared with the items in the list of recommended items (LRI) depends on the time difference (T) between connections in such a way that, as it is seen in figure 4, the subset of items to be compared comprises a constant number of items. In the case of figure 4, for a time difference (T) between connections comprised within a range [a, b], where 'a', is 6 hours and 'b' is 12 hours, the comparison set (CS) is 5. In this example, for a user profile whose time difference (T) is 8 hours then the number of items from its viewed items log (VL) to be compared with the list of recommended items (LRI) is 5 items. For another user profile whose time between connections T is 4 hours the CS is 8 items. This is advantageous for users accessing very frequently to the system in such a way that the more a user connects to a recommendation system, the more items he is expected to consume, and therefore a major rate of update is provided. This method provides such behaviour only if the time difference T between connections is lower than the threshold X. Besides, this embodiment is flexible and adaptable, in comparison with the one represented in figure 3 where a fixed number of viewed items from the viewed items log (VL) are compared with the list of recommended items (LRI) built with items from the database (DB), 5 in such case. This embodiment is advantageous because very frequent users are granted with a more active updating rate. As an advantage, an embodiment as the previously presented is suitable for a system with several users with variable demand of items.

In another embodiment shown in figure 5, there is provided a flow diagram of a method according to the present invention. This figure also shows a graphic representing the distribution of different comparison sets (CS).

In the graphic there is an embodiment for which if the time difference (T) between connections is lower than 'a', the comparison set (512) is 10 items and if the time between connections is greater than 'a' and lower than the threshold (X), the comparison set (513) is 5 items, otherwise no comparison is performed and the update of the list of recommended items (LRI) is performed as it is disclosed in the state of the art; this means that for user whose time between connections is greater than the threshold the personal update is not performed and there might be recommendations which are repeated with respect to previous times.

As it is seen in figure 5, in a first stage a user associated with a user profile connects (51) to the recommendation system (RS), and the recommendation system (RS) determines (52) a current connection time (t1). Subsequently, the recommendation system (RS) checks (53) whether it is the first time that said user profile connects to the recommendation system (RS) thought any user device (UD).

*First time connection of a user profile to the recommendation system* (*RS*)

In this case, it is the first connection of the user profile to the recommendation system (RS). Then, the recommendation system (RS) sends (510) a list of recommended items (LRI) to the user device (UD) from which the user profile is connected. After that, the recommendation system assigns (511) a value to a parameter (t2) indicating the last connection time associated to the user profile a value this parameter being assigned with the value of t1; this is, t1=t2, or current time. The list of recommended items (LRI) may be a standard list of contents with all type of items, for example, political news, sport news, etc., or recommended items based on the rate of the favourites items from the users of the same cluster, etc.

*Second and further connections from a user profile*

In the case of the second and further accesses to the recommendation system (RS), the time difference (T) between connections is determined (54) according to the following expression:

$$T = \text{current connection time (t1)} - \text{last connection time (t2)}$$

Next, the recommendation system (RS) checks (55) whether T is greater than a threshold (X). If T is greater than the threshold (X), the recommendation system (RS) sends (510) the last list of recommended items (LRI), and assigns (511) to t2 the value of t1.

If T is lower than the threshold (X), the recommendation system (RS) selects (56) the subset (512, 513) of the comparison sets (CS) which may be appropriate to the user; subsequently the recommendation system (RS) provides (57) a list of recommended items (LRI) and compares (58) a number of items indicated by the CS from the viewed items log (VL) with said list (LRI) so that the coincident ones can be deleted. As it is shown in figure 5, in an example, this comparison set CS is dependent on the time between connections. In that case, the CS is indirectly proportional to the time difference (T).

If there are no coincident items, then the recommendation system (RS) may send (510) the list of recommended items (LRI) which has been created, and assigns (511) to t2 the value of t1.

If there are coincident items to update or delete, the recommendation system (RS) deletes (59) the repeated items from the list of recommended items (LRI) which has been created. The deletion process (59) may comprise:

- deleting (31, 59), from the list of recommended items (LRI) associated with the user profile, one or more of the items in common with the viewed items log (VL) of said user profile, or
- creating a complete new list of recommended items (LRI) which may be a standard list of contents with all type of items, for example political news, sport news, etc., or recommended items rated as favourites items of the users of the same cluster, etc.

Finally, the recommendation system (RS) sends (510) the list of recommended items (LRI) which has been created, and assigns (511) to t2 the value of t1.

In an example, a user device (UD) may receive a list of recommended items (LRI) and may compare items from the viewed items log (VL) with said LRI so that the deletion and updating processes are performed on the user device (UD) for a particular user profile.

**Claims**

1. A method for updating a list of recommended items (LRI) for a user profile connecting to a recommendation system via a user device, the list of recommended items (LRI) being within the recommendation system (RS), said recommendation system (RS) comprising one or more viewed items logs (VL) associated with the user, the method comprising the steps of:

   a) selecting (56) a subset (512, 513) of items within the one or more viewed items logs (VL), wherein the size of the subset depends on a time difference (T) between consecutive connections by the user to the recommendation system (RS);
   b) comparing (58) the selected subset with the list of recommended items (LRI),
   c) deleting (59), from the list of recommended items (LRI), one or more items in common with the subset (512, 513) of items within the one or more viewed items logs (VL).

2. A method for updating a list of recommended items (LRI) according to claim 1 wherein the number of items in the subset of the items in the viewed items logs (VL) associated with the user profile (UP) of said user is indirectly proportional to the time difference (T) between consecutive connections by the user to the recommendation system (RS).

3. A method for updating a list of recommended items (LRI) according to claim 2 wherein the subset of items which is compared (58) in the viewed items log (VL) associated with a user profile against a list of recommended items (LRI) associated with said user profile, named as comparison set (CS) (512, 513), comprises a constant number of items for a time difference (T) between connections such that, given a range [a, b] where 'a' and 'b' are particular times between connections, wherein 'a' is lower than 'b' and lower than a pre-set threshold X, and 'b' is bigger than 'a' and lower than X, then:

   - if T is lower than a, the constant number of items is N;
   - if T is bigger than a, and lower than b, the constant number of items is M, wherein M is a lower number than N;
   - if T is bigger than b and lower than X, the constant number of items is E, wherein E is a lower number than N and also a lower number than M.

4. A method for updating a list of recommended items (LRI) according to claim 3 wherein the value of the predetermined threshold (X) depends on the type of recommended items.

5. A method for updating a list of recommended items (LRI) according to any of the preceding claims wherein the list of recommended items (LRI) is further updated according to a rating system.

6. A method for updating a list of recommended items (LRI) according to any of claims 3 to 5 wherein the value of the predetermined threshold (X) is dependent on the moment of connection, preferably an hour of the day or a day of the week.

7. A method for dynamically changing recommended items for user profiles (UP) within a recommendation system (RS), the recommendation system (RS) comprising one or more list of recommended items (LRI) associated with user profiles (UP),
   the method comprising the steps of:

   i. determining a connection time (t1) at which a user associated with a user profile (UP) connects via a user device (UD) to the recommendation system (RS),
   ii. determining a time difference (T) between the connection time (t1) and a previous connection time (t2) by the user,
   iii. running, by the recommendation system (RS), a method for updating a list of recommended items (LRI) according to the method of claims 1 to 6, if the time T is lower than a pre-set threshold (X), the list of recommended items associated with a user profile (UP) of said user,

iv. sending the list of recommended items (LRI).

8. A method for dynamically changing recommended items for user profiles (UP) accessing for the first time to a recommendation system (RS) the recommendation system (RS) comprising one or more list of recommended items (LRI) associated with user profiles (UP), the method comprising the steps of:

> i. determining a connection time (t1) at which a user associated with a user profile (UP) connects via a user device (UD) to the recommendation system (RS),
> ii. upon determination that the connection time (t1) is the first time that the user connects via a user device (UD) to the recommendation system (RS), running, by the recommendation system (RS), an method for updating a list of recommended items (LRI) according to the method of claims 1 to 6-associated with a user profile (UP) of said user,
> iii. sending the list of recommended items (LRI).

9. An application for updating a list of recommended items (LRI), the application comprising:

> - means for determining a time difference (T) between consecutive connections by the user to the recommendation system (RS),
> - means for selecting a subset of items within one or more viewed items logs (VL), wherein the size of the subset depends on a time difference (T) between consecutive connections by the user to the recommendation system (RS);
> - means for comparing the selected subset with the list of recommended items (LRI),
> - means for deleting, from the list of recommended items (LRI), one or more items in common with the one or more viewed items logs (VL).

10. An application for updating a list of recommended items (LRI), the application comprising:

> - means for determining a connection time (t1) at which a user associated with a user profile connects via a user device (UD) to a recommendation system (RS),
> - means for determining a time difference (T) between the connection time (t1) and a previous connection time (t2) by said user,
> - means for reading a viewed items log (VL) comprising viewed items from a user profile,
> - means for reading a list of relevant items (LRI) sent by a recommendation system (RS),
> - means for comparing a time difference (T) between connections of a user profile to the recommendation system (RS), against a pre-set threshold (X),
> - means for running an algorithm to update a list of recommended items (LRI) according to the method of claims 1 to 6, if the time T is lower than a pre-set threshold (X), wherein the list of recommended items is associated with a user profile of said user,
> - means for sending the updated list of recommended items (LRI).

11. A recommendations system (RS) comprising:

> - a user's viewed items log (VL),
> - one or more lists of recommended items (LRI), and
> - means adapted to perform the relevant steps of a method according to any of claims 1 to 6 when they are performed in a recommendation system (RS).

12. A recommendation system (RS) comprising:

> - a user's viewed items log (VL),
> - one or more list of recommended items (LRI), and
> - means adapted to perform the relevant steps of a method according to any of claims 1 to 8 when they are performed in a recommendation system (RS).

FIG. 1

**FIG. 2**

EP 2 958 332 A1

DB

LRI_1

VL

UD

LRI_2

RS

31

**FIG. 3**

FIG. 4

**FIG. 5**

Europäisches
Patentamt

European
Patent Office

Office européen
des brevets

**EUROPEAN SEARCH REPORT**

Application Number

EP 14 38 2228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/157242 A1 (CORDRAY CHARLES [US] ET AL) 5 July 2007 (2007-07-05)<br>* figures 12, 13, 17, 18 *<br>* paragraph [0135] - paragraph [0137] *<br>* paragraph [0148] - paragraph [0167] *<br>* paragraph [0179] - paragraph [0180] * | 1-12 | INV.<br>H04N21/25<br>H04N21/482<br>H04N21/24<br>H04N21/475<br>H04N21/442 |
| X | US 2004/088730 A1 (GOPALAN SRIVIDYA [IN] ET AL) 6 May 2004 (2004-05-06)<br>* figures 1, 3, 7, 17, 18 *<br>* paragraph [0123] - paragraph [0130] *<br>* paragraph [0208] - paragraph [0241] *<br>* paragraph [0254] - paragraph [0255] * | 1-12 | |
| Y | US 2013/110772 A1 (SVENDSEN HUGH BLAKE [US]) 2 May 2013 (2013-05-02)<br>* figures 1, 2, 4, 14-17 *<br>* paragraphs [0002], [0043], [0044] *<br>* paragraph [0050] - paragraph [0064] *<br>* paragraph [0104] - paragraph [0122] * | 1-12 | |
| Y | US 2007/168342 A1 (SINGERMAN BRIAN A [US] ET AL) 19 July 2007 (2007-07-19)<br>* figures 4, 5 *<br>* paragraph [0025] - paragraph [0040] * | 1-12 | TECHNICAL FIELDS SEARCHED (IPC)<br><br>H04N<br>G06Q<br>G06F<br>H04H |

The present search report has been drawn up for all claims

| Place of search | Date of completion of the search | Examiner |
|---|---|---|
| Munich | 28 October 2014 | Döttling, Martin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 14 38 2228

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2014

| Patent document cited in search report | | Publication date | Patent family member(s) | | Publication date |
|---|---|---|---|---|---|
| US 2007157242 | A1 | 05-07-2007 | US | 2007157242 A1 | 05-07-2007 |
| | | | US | 2011179435 A1 | 21-07-2011 |
| US 2004088730 | A1 | 06-05-2004 | NONE | | |
| US 2013110772 | A1 | 02-05-2013 | US | 2013110772 A1 | 02-05-2013 |
| | | | US | 2013110848 A1 | 02-05-2013 |
| | | | WO | 2013077983 A1 | 30-05-2013 |
| US 2007168342 | A1 | 19-07-2007 | US | 2007168342 A1 | 19-07-2007 |
| | | | WO | 2007076528 A1 | 05-07-2007 |

EPO FORM P0459

For more details about this annex : see Official Journal of the European Patent Office, No. 12/82

**EP 2 958 332 A1**

## REFERENCES CITED IN THE DESCRIPTION

**Patent documents cited in the description**

- JP 2013109425 B
- US 2012331494 A
- US 2013046772 A